# EUROPÄISCHE PATENTSCHRIFT

(11) **EP 0 894 250 B1**
(45) Veröffentlichungstag und Bekanntmachung des Hinweises auf die Patenterteilung: **25.10.2000**
(21) Anmeldenummer: 97922845.9
(22) Anmeldetag: 16.04.1997
(51) Int. Cl.: G01L 5/00, G01M 5/00

(54) **VERFAHREN UND EINRICHTUNG ZUM PRÜFEN DER FESTIGKEIT VON STEHEND VERANKERTEN MASTEN**
PROCESS AND DEVICE FOR CHECKING THE SOLIDITY OF VERTICALLY ANCHORED MASTS
PROCEDE ET DISPOSITIF POUR VERIFIER LA SOLIDITE DE MATS ANCRES VERTICALEMENT

(30) Priorität: 18.04.1996 DE 29607045 U
(43) Veröffentlichungstag der Anmeldung: 03.02.1999
(73) Patentinhaber: Roch, Mathias, 23923 Herrnburg (DE); Roch, Oliver, 23623 Ahrensbök (DE)
(72) Erfinder: Roch, Mathias, 23923 Herrnburg (DE); Roch, Oliver, 23623 Ahrensbök (DE)
(74) Vertreter: Wilcken, Thomas, Dipl.-Ing.
(86) Internationale Anmeldenummer: DE9700773
(87) Internationale Veröffentlichungsnummer: WO9740355

(56) Entgegenhaltungen:
- EP-A- 0 638 794
- DE-U- 9 404 664
- US-A- 5 212 654

## Beschreibung

Die Erfindung geht aus von einem Verfahren und einer Einrichtung zum Prüfen der Festigkeit von stehend verankerten Masten gemäß dem Oberbegriff der Patentansprüche 1 bzw. 7.

Ein derartiges Verfahren und eine Einrichtung dafür sind aus der DE-U-94 04 664 und aus der EP-A-0 638 794 bekannt. Die Einrichtung umfaßt eine Krafteinheit, die eine über einen Kraftsensor fortlaufend gemessene Kraft in den Mast oberhalb seiner Erdbodenverankerung einleitet, einen Wegsensor, der die zu der eingeleiteten Kraft zugehörige Mastauslenkung fortlaufend mißt, und eine Auswerteeinheit, der beide Meßwertarten fortlaufend zugeleitet werden. Die Krafteinheit leitet eine Druck- oder Zugkraft als Prüflast bis zu einem vorgegebenen Wert in den Mast ein, wobei die vorgenannten Meßwerte in der Auswerteeinheit in ein Verhältnis gesetzt werden, wobei die Kraft in Abhängigkeit von der Mastauslenkung dargestellt wird. Ergibt sich bis zur Prüflast eine gerade Linie, wird der Mast einschließlich seiner Verankerung für in Ordnung befunden. Ergibt sich, daß die gerade Linie vor Erreichen der Prüflast in eine gekrümmte Linie mit kleiner werdender Steigung übergeht, liegt eine plastische Verformung des Mastes vor mit der Folge, daß der Mast ausgewechselt werden muß.

Das Verfahren und die Einrichtung haben sich in der Praxis bewährt, da es hiermit auf einfache und schnelle Weise möglich ist, die Standfestigkeit und Biegefestigkeit des Mastes festzustellen. Die Biegefestigkeit des Mastes wird aber auch dadurch bestimmt, ob der Mast im Laufe der Zeit Risse erhalten hat, die seine Lebensdauer beeinträchtigen.

Die Aufgabe der Erfindung besteht darin, ein Verfahren und eine Einrichtung der einleitend angeführten Art so weiterzubilden, daß eine Aussage über eine Rißfreiheit bzw. über eine Rißbehaftung des Mastes erreicht werden kann.

Die Lösung der Aufgabe ist in den Patentansprüchen 1 und 7 angegeben.

Mit dieser Lösung ist es schnell und mit wenig Materialaufwand möglich festzustellen, ob ein Mast rißbehaftet ist oder nicht. Wenn der Mast z.B. zunächst mit einer Druckkraft belastet wird, so wird er anschließend in derselben vertikalen Prüfebene mit einer Zugkraft belastet. In beiden Fällen werden die Kraft-Weg-Werte in der Auswerteeinheit in das Verhältnis zueinander gesetzt. Man erhält hierbei zwei gerade Linien mit bestimmter Steigung. Bei beiden sich ergebenden geraden Linien sind besonders die Steigungen wichtige Merkmale, die mit Referenzwerten technisch verglichen werden. Aus der geraden Linie mit der kleineren Steigung ergibt sich, daß der Mast mit mindestens einem Riß behaftet ist, denn er verhält sich aufgrund des Risses elastischer. Je nachdem, ob die Steigung der erhaltenen geraden Linie einen vorgegebenen Wert unterschreitet oder nicht, kann der Mast weiter in Betrieb bleiben bzw. er muß ausgetauscht werden. Um die Aussage über die Rißbehaftung des Mastes noch vollständiger zu machen, wird die Biegemomentprüfung mittels einer Zug- und einer Druckkraft in wenigstens einer anderen vertikalen Prüfungsebene wiederholt, die z.B. in einem rechten Winkel zu der ersten Prüfungsebene steht. Auf diese Weise wird der gesamte Umfang des zu prüfenden Mastes hinsichtlich der Rißbehaftung erfaßt. Die Auslenkungskomponente der Kraft-Weg-Werte kann sowohl eine Wegstrecke als auch ein Winkelweg sein.

In vorteilhafter Ausgestaltung der Erfindung besteht ein Merkmal darin, daß die Steigungen der auf den gleichen Nullpunkt bezogenen Verläufe der Funktionen f1 und f2 in Abhängigkeit von unterschiedlichen Zeitpunkten als Kriterium für eine Rißvergrößerung auswertbar und in Form einer Kennlinie für jeden Mast auf einem an die Auswerteeinheit angeschlossenen Monitor und/oder Drucker dokumentierbar sind. Hierdurch ist es mit der erfindungsgemäßen Einrichtung möglich, für jeden geprüften Mast, bei dem die Kraft-Weg-Prüfung in Zeitabständen wiederholt und die Einzelergebnisse dokumentiert worden sind, festzustellen, wie seine auf diese Weise für die betreffende Prüfungsebene erhaltene zeitabhängige Kennlinie verläuft. Aus dem Verlauf dieser Kennlinie ist dann genau erkennbar, ob und in etwa welchem Maße sich ein bei einer früheren Prüfung festgestellter Riß vergrößert hat, woraus sich wiederum ein Hinweis auf die Reststandzeit des geprüften Mastes ergibt. So ist also daraus ablesbar, wann die nächste Mastprüfung vorgenommen werden muß bzw. wie lange der Mast noch ohne Gefahr für sein Versagen stehenbleiben kann.

Die Erfindung ist nachstehend an einem in den anliegenden Zeichnungen dargestellten Ausführungsbeispiel näher erläutert. Es zeigen:
- Figur 1: schematisch und stark vereinfacht den Aufbau einer erfindungsgemäßen Einrichtung in Verbindung mit einem zu prüfenden Mast,
- Figur 2: ein Prüfungsvorgang an einem Mast mit der Einrichtung nach Fig. 1,
- Figuren 3 und 4: Diagramme, die die momentanen Kennlinien bei einem geprüften Mast zeigen,
- Figur 5: ein Diagramm, das die momentanen Kennlinien bei einem anderen geprüften Mast zeigen,
- Figur 6: ein Diagramm, das eine zeitabhängige Kennlinie zeigt, die aus den Prüfungsergebnissen der momentanen Kennlinien nach Figur 5 des anderen Mastes erhalten worden sind, und
- Figur 7: ein weiteres Diagramm, bei dem abgeknickte Mastprüfungskennlinien erhalten wurden.

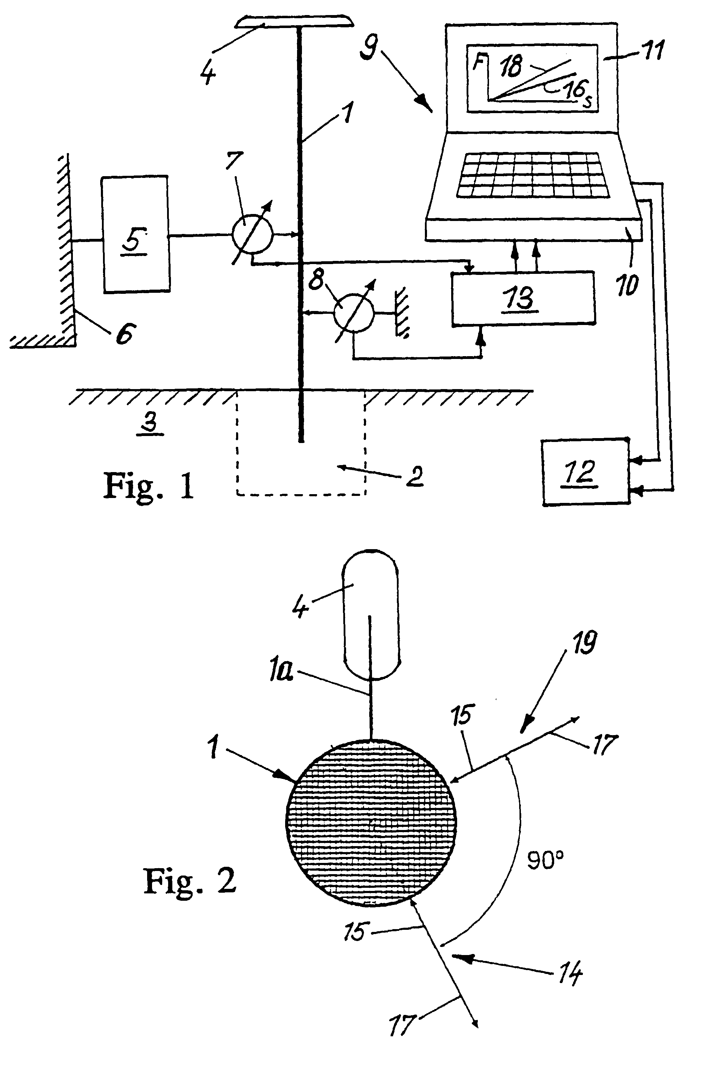

Gemäß den Figuren 1 und 2 ist ein Mast 1 mittels einer Verankerung 2 im Erdboden 3 befestigt. Der Mast 1 sei beispielsweise ein Lichtmast, der gegebenenfalls an seinem Oberende einen Ausleger la aufweist, an dessen Ende eine Straßenleuchte 4 angebracht ist.

Eine Einrichtung zur Prüfung der Festigkeit des stehend verankerten Mastes umfaßt gemäß Fig. 1 eine Krafteinheit 5, die beispielsweise an einem mobilen, schematisch angedeuteten Fahrzeug 6 anbringbar ist, einen Kraftsensor 7, der sich zwischen der Krafteinheit 5 und dem Mast 1 befindet, einen vorzugsweise als Wegstreckensensor ausgebildeten Wegsensor 8, der in derselben vertikalen Prüfungsebene der Einheit 5 und des Kraftsensors 7, jedoch auf der anderen Seite des Mastes 1 angeordnet ist, sowie eine mit dem Kraftsensor und dem Wegsensor verschaltete Auswerteeinheit 9. Diese Auswerteeinheit umfaßt einen Rechner 10, z.B. einen Personalcomputer, der mit einem Monitor 11 und/oder einem Drucker 12 verbunden ist. Ferner ist ein Transmitter 13 vorgesehen, der die Signale des Kraftsensors 7 und des Wegsensors 8 in aufbereiteter Form dem Rechner 10 zuleitet. Der genauere, hier nicht weiter entscheidende Aufbau der vorstehend beschriebenen Einrichtung kann so ausgeführt sein, wie es in der DE-U-94 04 664 beschrieben ist. Es ist ferner möglich, z. B. zwei Wegsensoren 8 zu verwenden, deren Meßwerte gemittelt werden, so daß der gemittelte Wert für die Kennlinienermittlung benutzt wird.

Die Auswerteeinheit 9 ist derart ausgestaltet, daß sowohl die Druckkraftmeßergebnisse als auch die Zugkraftmeßergebnisse in der jeweiligen Prüfungsebene und jeweils bezogen auf die zugehörige Mastauslenkung gemeinsam angezeigt werden. Die Einheit 9 kann auch Vergleichsschaltkreise umfassen, die für Referenz-Kennlinien bestimmt sind. Somit werden die erhaltenen momentanen Kennlinien mit den entsprechenden Referenz-Kennlinien in der Auswerteeinheit automatisch verglichen und das Ergebnis optisch (symbolisch oder alphabetisch) vorzugsweise auf dem Monitor und/oder Drucker angezeigt. Alternativ oder zusätzlich kann das Ergebnis auch akustisch angegeben werden.

Die Prüfung des Mastes auf insbesondere Biegefestigkeit wird wie folgt durchgeführt.

Es wird zunächst eine erste vertikale Prüfungsebene ausgewählt, in welcher der Mast 1 mittels einer Zugkraft und einer Druckkraft, die oberhalb der Mastverankerung 2 an vorbestimmter Stelle am Mast angreifen, auf Biegung beansprucht wird. Vorzugsweise wird eine solche Ebene gewählt werden, in welcher die Hauptbelastung des Mastes liegt. Hierbei wird vorzugsweise die Belastung des Mastes durch Windkräfte berücksichtigt.

In Figur 2 ist mit dem Bezugszeichen 14 die erste vertikale Prüfungsebene angedeutet, in welcher auch die Hauptbelastungskräfte des verankerten Mastes wirken. Es sei angenommen, daß zunächst eine Druckkraft 15 kontinuierlich auf den Mast ausgeübt wird. Der an vorbestimmter Stelle oberhalb der Verankerung 2 an den Mast 1 angeschlossene Wegsensor 8 erfaßt bei diesem Beispiel die zur entsprechenden Kraft F gehörenden, seitlichen Wegstrecken-Auslenkungen S. Beide Werte werden dabei zeitgleich oder fast zeitgleich und fortlaufend in den Transmitter 13 eingegeben, der sie wiederum entsprechend vorbereitet in den Rechner 10 eingibt. Dieser verarbeitet entsprechend einem Programm die eintreffenden Meßwerte, d.h. er setzt sie in ein Verhältnis, und zwar in der Regel als Funktion f von der Kraft F in Abhängigkeit von der Mastauslenkung S. Es entsteht dabei eine momentane Kennlinie 16, wie es auf dem Monitor 11 zu sehen ist. Alternativ oder zusätzlich kann diese Kennlinie 16 auch auf dem mit dem Rechner 10 verbundenen Drucker 12 ausgedruckt und somit dokumentiert werden.

Anschließend wird in derselben vertikalen Prüfungsebene 14 eine Zugkraft 17 kontinuierlich auf den Mast 1 ausgeübt. Entsprechend der vorstehenden Erläuterung wird wiederum eine momentane Kennlinie 18 erhalten, wie die Grafik auf dem Monitor 11 zeigt. Diese Kennlinie kann die gleiche Steigung aufweisen wie die zuvor erhaltene Kennlinie 16, sie kann aber auch davon abweichen, wie es dargestellt ist. Auch diese Kennlinie kann auf dem Drucker 12 ausgedruckt werden.

Die Werte beider Kennlinien 16, 18 werden miteinander oder mit den Referenz-Werten der Vergleichsschaltkreise automatisch verglichen und das jeweilige Ergebnis angezeigt.

Der Mast 1 wird nun in wenigstens einer zweiten vertikalen Prüfungsebene 19 wie vorstehend erläutert geprüft. Diese zweite Prüfungsebene verläuft vorzugsweise im rechten Winkel zur ersten vertikalen Prüfungsebene 14. Es werden wiederum zwei momentane Kennlinien erhalten, die auf dem Monitor 11 angezeigt werden und/oder mit dem Drucker 12 dauerhaft dokumentierbar sind. Wenn der Mast in den beiden Prüfungsebenen 14 und 19 untersucht worden ist, ist damit eine sehr gute Aussage bezüglich des gesamten Mastumfanges hinsichtlich einer eventuellen Rißbehaftung gegeben.

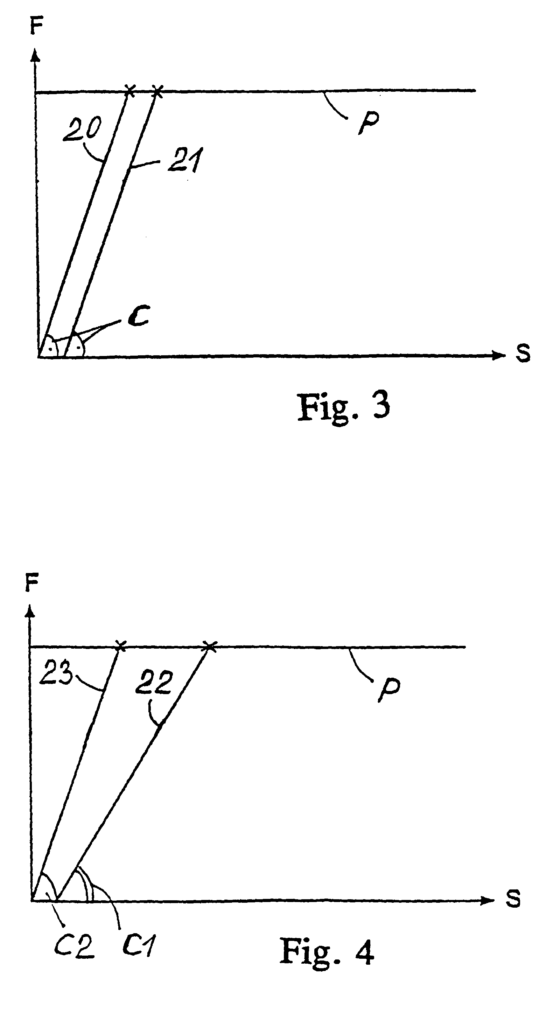

Die Kennlinien der Diagramme in den nachstehend beschriebenen Figuren 3 bis 7 geben die von der Auswerteeinheit 10 automatisch ausgewerteten Meßergebnisse wieder. Der Einfachheit halber sollen die Kennlinien dieser Figuren die Resultate nur einer der vertikalen Prüfungsebenen darstellen. Sie gelten sinngemäß natürlich auch für die andere vertikale Prüfungsebene.

Es sei angenommen, daß ein erster Mast einer Biegebelastung mit einer Druckkraft unterworfen wird. Man erhält gemäß Figur 3 beispielsweise eine momentane Kennlinie 20 als gerade Linie, und zwar verläuft diese Linie in gerader Form bis zum Erreichen der Prüflast P. Anschließend wird der Mast einer Biegebelastung mit einer Zugkraft unterworfen, und man erhält daraufhin eine weitere momentane Kennlinie 21. Auch diese Kennlinie verläuft gerade bis zur Prüflast P. In Figur 3 sind die beiden Kennlinien 20 und 21 nur der Deutlichkeit halber nebeneinander dargestellt; tatsächlich gehen sie vom gleichen Nullpunkt aus, und im vorliegenden Fall decken sie sich.

Beide Kennlinien 20 und 21 weisen über ihre gesamte Länge die gleiche Steigung C auf. Diese Kennlinien werden mittels Vergleichsschaltkreisen mit Referenz-Kennlinien des Mastes verglichen, die den Werten eines vollständig intakten Mastes entsprechen. Im vorliegenden Fall nach Figur 3 sei angenommen, daß die im Programm des Rechners 10 gespeicherten und auch auf dem Monitor 11 angezeigten Referenz-Kennlinien mit den durch die Prüfung erhaltenen Kennlinien 20 und 21 bezüglich ihrer Steigung und ihres Verlaufs übereinstimmen. Daraus folgt, daß der geprüfte Mast in Ordnung ist und somit keinen Riß aufweist. Da beide Kennlinien hier den gleichen Verlauf haben, ist ein Vergleich mit Referenz-Kennlinien nicht unbedingt nötig.

Figur 4 zeigt ein Prüfungsergebnis eines anderen Mastes (es kann natürlich auch das Prüfungsergebnis des ersten Mastes in einer zweiten Prüfungsebene sein). Es ist ersichtlich, daß die momentane Zugkraft-Kennlinie 22 eine kleinere Steigung C1 aufweist als die momentane Druckkraft-Kennlinie 23, die eine größere Steigung C2 aufweist. Es sei angenommen, daß die Steigung und der Verlauf der Kennlinie 23 mit der entsprechenden Referenz-Kennlinie übereinstimmt, so daß der geprüfte Mast in diesem Punkte in Ordnung ist und zumindest keinen Riß auf der Seite hat, auf der die Druckkraft angegriffen hat.

Aus der Kennlinie 22 mit der geringeren Steigung C1 ergibt sich im Vergleich zu der Kennlinie 23 ein Riß im Mast, da sich der Mast, wie schon erwähnt, bei Vorhandensein eines Risses elastischer verhält. Dieser Riß befindet sich an derjenigen Umfangsstelle des Mastes, die der Krafteinheit 5, von welcher die Zugkraft-Belastung ausgegangen ist, gegenüberliegt. Da die momentane Kennlinie 22 bis zur Prüflast P gerade verläuft und noch eine verhältnismäßig große Steigung aufweist, kann davon ausgegangen werden, daß der geprüfte Mast noch für eine gewisse Zeit in Betrieb sein kann bzw. erst zu einem späteren Zeitpunkt ausgewechselt zu werden braucht. Diese spätere Auswechselung kann sich nach zeitlichen Erfahrungswerten richten.

Es ist also aus der Divergenz der auf den gleichen Nullpunkt bezogenen, geradlinigen Verläufe der genannten momentanen Kennlinien bzw. der diesen zugrundeliegenden Funktionen f1 und f2, gegebenenfalls in Verbindung mit den Referenz-Kennlinien, erkennbar, daß diese Divergenz als Kriterium für eine Rißbildung im geprüften Mast in der Auswerteeinheit verwertbar ist.

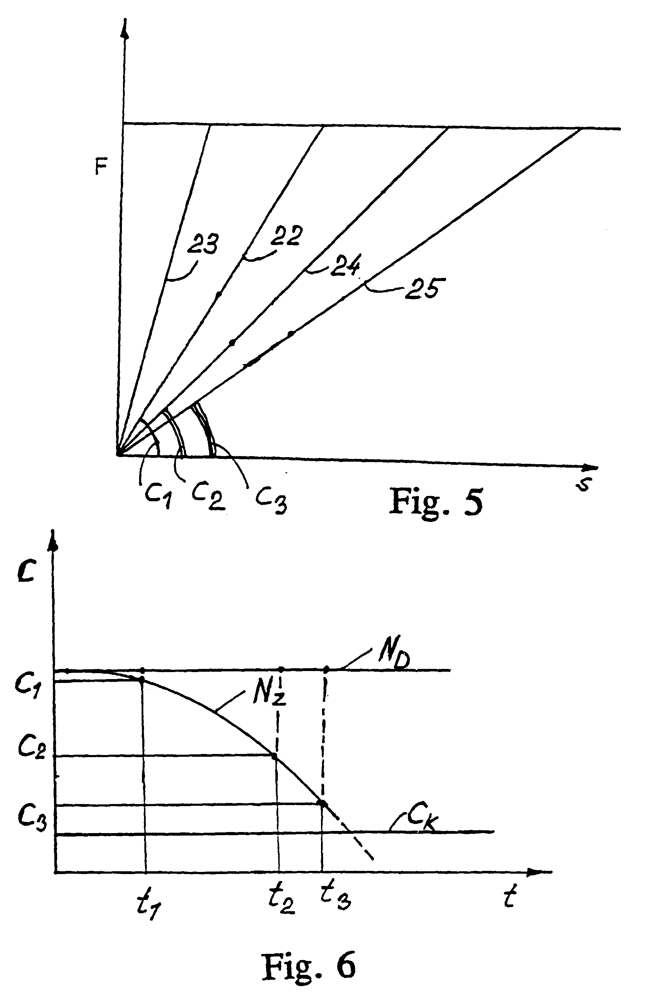

Um den Zeitpunkt des notwendigen Auswechselns eines Mastes aufgrund einer Rißbehaftung ziemlich genau vorhersagen zu können, ist die Kenntnis der Tendenz des zeitlichen Verlaufs der jeweiligen Steigungskennlinie eines geprüften Mastes von Vorteil. Hierzu geben die erhaltenen Diagramme nach den Figuren 5 und 6 eine zuverlässige Auskunft. Es sei angenommen, daß der geprüfte andere Mast gemäß Figur 4 in weiteren Zeitabständen geprüft wird, wobei wiederum auf die Prüfungsergebnisse nur einer vertikalen Prüfungsebene Bezug genommen ist.

In Figur 5 sind bereits die momentanen Kennlinien 22 und 23 (vgl. Fig. 4) aus der ersten Prüfung (Druck und Zug) dargestellt. Nach einer bestimmten Zeit t₂, beispielsweise nach einem Jahr, wird die nächste Druck-Zug-Prüfung vorgenommen. Man erhält nach dieser Zeit gemäß Figur 5 eine Druck-Kennlinie, die sich mit der entsprechenden Kennlinie 23 deckt. An der entsprechenden Stelle ist der Mast gemäß dem finalen Auswertesignal weiterhin in Ordnung. Bei der entsprechenden Zug-Belastung in derselben Prüfungsebene ergibt sich jedoch eine momentane Zug-Kennlinie 24, die von der entsprechenden, vorher bei der ersten Prüfung gewonnenen Kennlinie 22 abweicht, also eine kleinere Steigung C2 hat. Das Auswertesignal ergibt, daß sich der vorhandene Riß an der entsprechenden Stelle vergrößert hat. Nach einer weiteren Zeit t₃, beispielsweise einem halben Jahr nach der zweiten Prüfung, wird in derselben Prüfebene an denselben Stellen desselben Mastes eine dritte Prüfung vorgenommen. Wiederum deckt sich gemäß dem Beispiel nach Figur 5 die erhaltene Druckkraft-Kennlinie mit der ursprünglichen Kennlinie 23 mit der Folge, daß der Mast auf seiner entsprechenden Seite noch ohne Riß ist. Jedoch erhält man eine noch weitere Zugkraft-Kennlinie 25, deren Steigung C3 noch geringer ist als die Steigung C2 der entsprechenden Kennlinie 24 der zweiten Prüfung, woraus folgt, daß der schon vorab festgestellte Riß noch größer geworden ist. Schon aus den Auswertesignalen dieser neuen Kennlinien in direktem Vergleich ist eine ziemlich genaue Voraussage über die Reststandzeit des geprüften Mastes möglich.

Die Auswerteeinheit 9 bzw. der Rechner 10 kann so ausgebildet sein, daß aus den erhaltenen, unterschiedlichen Steigungen der entsprechenden Kennlinien gemäß Figur 5 eine zeitabhängige Kennlinie für die Veränderung der Steigung der jeweiligen Kennlinien errechenbar ist. Beispielsweise ist in Figur 6 eine zeitabhängige Kennlinie N dargestellt, die den zeitlichen Verlauf der Steigungen auf der Basis der Änderungen der Zugkraft-Kennlinien 22, 24 und 25 darstellt. Man erkennt, daß sich das untere Ende der Steigungsänderungs-Kennlinie N_{Z} sehr nahe an einem kritischen Wert C_{K} befindet. Hieraus wird ein Anzeigesignal mittels eines Schaltkreises entwickelt, daß der geprüfte Mast in Kürze auszutauschen ist. Somit ist also durch die Kennlinie N_{Z} gemäß Figur 6 eine sehr genaue Aussage über den Auswechselzeitpunkt des geprüften Mastes erzielbar. Außer den Kennlinien 22, 23, 24 und 25, die auf dem an die Auswerteeinheit 9 angeschlossenen Monitor 11 anzeigbar und/oder Drucker 12 dokumentierbar sind, ist auch die Steigungsänderungs-Kennlinie N_{Z} nach Figur 6 auf dem Monitor anzeigbar und/oder mit dem Drucker dokumentierbar.

Die horizontale Kennlinie N_{D} in Figur 6 zeigt auch optisch, daß bei den Druckkraft-Prüfungen kein Riß im Mast festgestellt werden konnte.

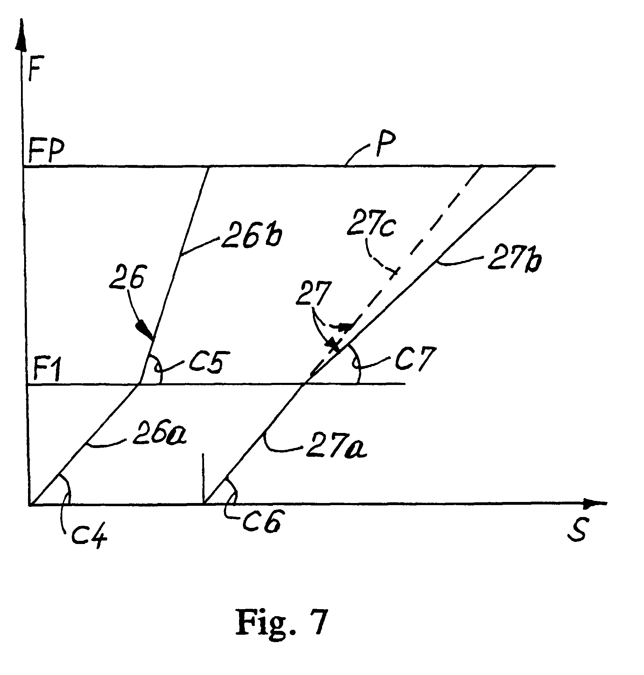

In Fig. 7 ist noch ein weiteres Beispiel einer Mastprüfung dargestellt. In der ausgewählten vertikalen Prüfebene ergibt sich bei Druckkraft-Belastung eine Kennlinie 26, die sich mindestens aus den Abschnitten 26a und 26b zusammensetzt. Der erste Abschnitt 26a beginnt mit der Steigung C4 und verläuft gerade oder im wesentlichen gerade bis zu einer Kraft F1. Der sich daran anschließende zweite Abschnitt 26b verläuft ebenfalls gerade oder im wesentlichen gerade bis zur maximalen Prüfkraft FP, weist aber gegenüber der Steigung C4 des ersten Abschnittes eine steilere Steigung C5 auf. Insbesondere der erste Abschnitt kann wiederum aus mehreren Abschnitten bestehen (nicht gezeigt), die durch verwertbare Steigungsänderungen gekennzeichnet sind und weitergehende Aussagen über eine Rißschädigung des Mastes zulassen.

Bei Gegenbelastung des Mastes in derselben Prüfebene, d. h. bei Anwendung einer Zugkraft-Belastung, ergibt sich eine Kennlinie 27, die ebenfalls aus mindestens zwei Abschnitten 27a und 27b bestehen kann. Sie kann aber auch von Anfang an aus nur einer geraden oder im wesentlichen geraden Linie bestehen, wie es gestrichelt mit 27c weitergeführt ist. Im ersten Fall beginnt der erste Abschnitt 27a mit seiner Steigung C6, die der Steigung C4 des Abschnittes 26a entspricht oder im wesentlichen entspricht, bis etwa zu der Kraft F1, woran sich der zweite Abschnitt 27b mit einer Steigung C7 anschließt, die kleiner ist als die anfängliche Steigung C6. Insbesondere der zweite Abschnitt kann wiederum aus mehreren Abschnitten bestehen (nicht gezeigt), die durch verwertbare Steigungsänderungen gekennzeichnet sind und weitergehende Aussagen über eine Rißschädigung des Mastes zulassen.

Im vorliegenden Fall ergibt sich die wesentliche Abweichung der beiden Kennlinien voneinander in deren oberem Abschnitt. Es handelt sich hier um eine Rißschädigung des Mastes mit der Besonderheit, daß der Riß vor Anwendung der Druckkraft geringfügig offen ist, d. h. die sich gegenüberliegenden Rißflächen liegen nicht aneinander. Erfolgt die Druckkraft-Belastung auf den Riß, d. h. der Riß befindet sich in der Druckbelastungszone des Mastes, dann wird der Riß zusammengedrückt, d. h. er schließt sich. Somit verhält sich der Mast entlang des Abschnittes 26a elastischer als ein Mast ohne Riß, und es wird demgemäß zunächst die kleinere Steigung C4 festgestellt. Liegen die Rißflächen dann aneinander an, verhält sich der Mast wie ein Mast ohne Riß und es ergibt sich der zweite Kennlinienabschnitt 26b mit der steileren Steigung C5.

Erfolgt nun die Zugkraft-Belastung auf den Riß, d. h. der Riß befindet sich in der Zugbelastungszone des Mastes, wird der offene Riß weiter geöffnet und der Mast verhält sich bei der Prüfung von Anfang an ebenfalls elastischer als ein Mast ohne Riß. Hierbei kann die Steigung C6 des ersten Abschnittes 27a der Steigung C4 des Vergleichsabschnittes 26a entsprechen, wie es dargestellt ist, aber auch geringer als diese sein. Im wesentlichen abhängig von der Rißkonfiguration kann die Zugkraftkennlinie 27 ohne Steigungsänderung zur maximalen Prüfkraft FP gerade weiter verlaufen, wie es gestrichelt mit 27c angedeutet ist, oder sie kann etwa ab dem Kraftwert F1 abknicken, derart, daß die Steigung C7 des geraden oder im wesentlichen geraden Abschnittes 27b kleiner ist als die anfängliche Steigung C6.

Auch in dem Beispiel nach Fig. 7 weist also ein wenigstens teilweise voneinander abweichender Verlauf der beiden ermittelten Belastungskennlinien 26 und 27 auf eine Rißschädigung des Mastes hin. In Fig. 7 sind die beiden Kennlinien 26, 27 nur wegen der besseren Übersicht und des besseren Verständnisses gegeneinander versetzt gezeichnet; sie beginnen beide während ihrer Ermittlung selbstverständlich im Nullpunkt des Kraft-Weg-Diagrammes.

Die Auswerteeinheit 9 ist so eingerichtet, daß sowohl die geraden Kennlinien 20 bis 27 als auch die Steigungsänderungs-Kennlinien N_{Z} aus den von den Sensoren 7 und 8 erhaltenen Meßwerten unmittelbar oder mittelbar errechnet werden können. Auf jeden Fall werden immer sowohl eine Druckkraft-Kennlinie als auch eine Zugkraft-Kennlinie ausgewertet und in geeigneter Weise dargestellt, so daß im Vergleich miteinander oder mit vorgegebenen Referenzwerten festgestellt werden kann, ob der geprüfte Mast mit mindestens einem Riß behaftet ist oder nicht.

Bei der vorstehenden Erläuterung der vorgeschlagenen Einrichtung handelt es sich nur um die Berücksichtigung derjenigen Kennlinien, bei deren Ermittlung die jeweilige Prüflast erreicht wird. Wird die Prüflast nicht erreicht, ist das Versagen des Mastes nicht unbedingt auf einen Riß im Mast zurückzuführen, sondern z. B. auf ein Versagen seiner Verankerung im Erdboden. Ferner sei noch einmal betont, daß die Mastauslenkungen auch mittels Winkelsensoren festgestellt und entsprechend in der Auswerteeinheit 9 verarbeitet werden können.

## Patentansprüche

1. Verfahren zum Prüfen der Festigkeit von stehend verankerten Masten, gemäß dem in den Mast (1) oberhalb seiner Verankerung (2) ansteigende, mit einem Kraftsensor (7) erfaßbare Zug- und Druckkräfte F eingeleitet werden, um den Mast mit entgegengesetzt gerichteten Biegemomenten zu belasten, wobei mit wenigstens einem oberhalb der Mastverankerung gegen den Mast zur Anlage bringbaren Wegsensor (8) eine aufgrund der Biegemomente auftretende seitliche Auslenkung S des Mastes gemessen wird und wobei die von den Kraft- und Wegsensoren erzeugten Meßwerte für die Kraft F und die Auslenkung S zeitgleich oder fast zeitgleich in einer Auswerteeinheit (9) in bezug auf die Funktionen f = F(S) bzw. f = S(F) verarbeitet werden, und zwar gesondert nach Verläufen der Funktionen f1 für den Druckbelastungsfall und f2 für den Zugbelastungsfall, dadurch gekennzeichnet, daß eine bei elastischer Mastverformung ermittelte Abweichung der Steigung des Verlaufes der Funktion f1 von der Steigung des Verlaufes der Funktion f2 oder von jeweiligen Referenzwerten als Kriterium für zumindest eine Rißbildung im Mast (1) ausgewertet wird.

2. Verfahren nach Anspruch 1, dadurch gekennzeichnet, daß eine Divergenz der auf den gleichen Nullpunkt bezogenen geraden oder teilweisen geraden Verläufe der Funktionen f1 und f2 als Kriterium für eine Rißbildung ausgewertet wird.

3. Verfahren nach einem der Ansprüche 1 und 2, dadurch gekennzeichnet, daß die Funktionen f1 und f2 optisch gemeinsam auf einem an die Auswerteeinheit (9) angeschlossenen Monitor (11) dargestellt werden.

4. Verfahren nach einem der Ansprüche 1 bis 3, dadurch gekennzeichnet, daß der jeweilige Verlauf der Funktionen f1 und f2 mit einem an die Auswerteeinheit (9) angeschlossenen Drucker (12) gemeinsam aufgezeichnet wird.

5. Verfahren nach einem der Ansprüche 1 bis 4, dadurch gekennzeichnet, daß die Steigungen (C) der auf den gleichen Nullpunkt bezogenen Verläufe der Funktionen f1 und f2 in Abhängigkeit von unterschiedlichen Zeitpunkten als Kriterium für eine Rißvergrößerung ausgewertet werden.

6. Verfahren nach Anspruch 5, dadurch gekennzeichnet, daß die errechneten, zeitabhängigen Steigungen (C) der Verläufe der Funktionen f1 und f2 in Form einer Kennlinie (N) auf einem an die Auswerteeinheit (9) angeschlossenen Monitor (11) angezeigt und/oder mit einem Drucker (12) aufgezeichnet werden.

7. Einrichtung zum Prüfen der Festigkeit von stehend verankerten Masten mit einer Krafteinheit (5), mit der in den Mast (1) oberhalb seiner Verankerung (2) ansteigende, mit einem Kraftsensor (7) erfaßbare Zug- und Druckkräfte F einleitbar sind, um den Mast mit entgegengesetzt gerichteten Biegemomenten zu belasten, und mit wenigstens einem oberhalb der Mastverankerung (2) gegen den Mast (1) zur Anlage bringbaren Wegsensor (8) zum Messen der aufgrund der Biegemomente auftretenden seitlichen Auslenkung S des Mastes, wobei die von den Kraft- und Wegsensoren (7, 8) erzeugten Meßwerte für die Kraft F und die Auslenkung S zeitgleich oder fast zeitgleich in einer Auswerteeinheit (9) in bezug auf die Funktionen f = F(S) bzw. f = S(F) verarbeitbar sind, und zwar gesondert nach Verläufen der Funktionen f1 für den Druckbelastungsfall und f2 für den Zugbelastungsfall, zur Durchführung des Verfahrens nach einem der Ansprüche 1 bis 6, dadurch gekennzeichnet, daß eine bei elastischer Mastverformung ermittelte Abweichung der Steigung (C) des Verlaufes der Funktion f1 von der Steigung des Verlaufes der Funktion f2 oder von jeweiligen Referenzwerten als Kriterium für zumindest eine Rißbildung im Mast (1) in der Auswerteeinheit (9) auswertbar ist.

8. Einrichtung nach Anspruch 7, dadurch gekennzeichnet, daß eine Divergenz der auf den gleichen Nullpunkt bezogenen geraden oder teilweise geraden Verläufe der Funktionen f1 und f2 als Kriterium für eine Rißbildung auswertbar ist.

9. Einrichtung nach Anspruch 7 oder 8, dadurch gekennzeichnet, daß die Funktionen f1 und f2 optisch gemeinsam auf einem an die Auswerteeinheit (9) angeschlossenen Monitor (11) darstellbar sind.

10. Einrichtung nach einem der Ansprüche 7 bis 9, dadurch gekennzeichnet, daß die Funktionen f1 und f2 mit einem an die Auswerteeinheit (9) angeschlossenen Drucker (12) gemeinsam dokumentierbar sind.

11. Einrichtung nach einem der Ansprüche 7 bis 10, dadurch gekennzeichnet, daß die Steigungen (C) der auf den gleichen Nullpunkt bezogenen Verläufe der Funktionen f1 und f2 in Abhängigkeit von unterschiedlichen Zeitpunkten als Kriterium für eine Rißvergrößerung auswertbar sind.

12. Einrichtung nach Anspruch 11, dadurch gekennzeichnet, daß die errechneten, zeitabhängigen Steigungen der Verläufe der Funktionen f1 und f2 in Form einer Kennlinie (N) auf einem an die Auswerteeinheit (9) angeschlossenen Monitor (11) anzeigbar und/oder mit einem Drucker (12) dokumentierbar sind.

## Claims

1. Process for testing the strength of vertically anchored masts, according to which rising tensile and pressure forces F, which can be recorded by a force sensor (7), are introduced into the mast (1) above its anchorage (2), in order to load the mast with oppositely directed bending moments, wherein a lateral displacement S of the mast, occurring as a result of the bending moments, is measured by at least one path sensor (8) which can be brought to bear against the mast above the mast anchorage and wherein the measured value for the force F and the displacement S generated by the force and path sensors are processed with regard to the functions f = F(S) or f = S(F) in an evaluation unit (9) isochronously or almost isochronously, this being done separately according to courses of the functions f1 in the case of the pressure load and f2 in the case of the tensile load, characterised in that a divergence in the gradient of the course of function f1 from the gradient of the course of function f2 or from respective reference values, detected when the mast is elastically deformed, is evaluated as a criterion for at least one instance of cracking in the mast (1).

2. Process according to Claim 1, characterised in that a divergence of the straight or partially straight courses of functions f1 and f2, applied to the same zero point, is evaluated as a criterion for cracking.

3. Process according to one of Claims 1 and 2, characterised in that the functions f1 and f2 are represented as optically combined on a monitor (11) connected to the evaluation unit (9).

4. Process according to one of Claims 1 to 3, characterised in that the respective courses of functions f1 and f2 are mutually documented by a printer (12) connected to the evaluation unit (9).

5. Process according to one of Claims 1 to 4, characterised in that the gradients (C) of the courses of functions f1 and f2, applied to the same zero point, are evaluated depending on different points in time as a criterion for an increase in cracks.

6. Process according to Claim 5, characterised in that the calculated time-dependent gradients (C) of the courses of functions f1 and f2 are displayed in the form of a characteristic line (N) on a monitor (11) connected to the evaluation unit (9) and/or documented by a printer (12).

7. Device for testing the strength of vertically anchored masts with a force unit (5), by which rising tensile and pressure forces F, which can be recorded by a force sensor (7), can be introduced into the mast (1) above its anchorage (2), in order to load the mast with oppositely directed bending moments, and with at least one path sensor (8), which can be brought to bear against the mast (1) above the mast anchorage (2), for measuring the lateral displacement S of the mast, occurring as a result of the bending moments, wherein the measured values for the force F and the displacement S, generated by the force and path sensors (7, 8), can be processed with regard to the functions f = F(S) or f = S(F) in an evaluation unit (9) isochronously or almost isochronously, this being done separately according to courses of functions f1 in the case of the pressure load and f2 in the case of the tensile load, for carrying out the process according to one of Claims 1 to 6, characterised in that a divergence in the gradient (C) of the course of function f1 from the gradient of the course of function f2 or from respective reference values, detected when the mast is elastically deformed, can be evaluated in the evaluation unit (9) as a criterion for at least one instance of cracking in the mast (1).

8. Device according to Claim 7, characterised in that a divergence in the straight or partially straight courses of functions f1 and f2, applied to the same zero point, can be evaluated as a criterion for cracking.

9. Device according to Claim 7 or 8, characterised in that the functions f1 and f2 can be represented as optically combined on a monitor (11) connected to the evaluation unit (9).

10. Device according to one of Claims 7 to 9, characterised in that the functions f1 and f2 can be mutually documented by a printer (12) connected to the evaluation unit.

11. Device according to one of Claims 7 to 10, characterised in that the gradients (C) of the courses of functions f1 and f2, applied to the same zero point, can be evaluated depending on different points in time as a criterion for an increase in cracking.

12. Device according to Claim 11, characterised in that the calculated time-dependent gradients of the courses of functions f1 and f2 can be displayed on a monitor (11) connected to the evaluation unit (9) and/or documented by a printer in the form of a characteristic line (N).

## Revendications

1. Procédé de contrôle de la résistance de mâts ancrés en position verticale, selon lequel on applique au mât (1), au-dessus de son ancrage (2), des forces de traction et de compression F croissantes, pouvant être relevées à l'aide d'un capteur de force (7), en vue de solliciter le mât avec des moments de flexion de directions opposées, une déviation latérale S du mât, qui apparaît en raison des moments de flexion, étant mesurée à l'aide d'au moins un capteur de déplacement (8) pouvant être appliqué contre le mât, au-dessus de l'ancrage du mât, et les valeurs de mesure pour la force F et la déviation S, produites par les capteurs de force et de déplacement, étant traitées simultanément ou presque simultanément dans une unité de traitement (9) en ce qui concerne les fonctions f = F(S) ou respectivement f = S(F), ceci de manière distincte selon des lois de variation des fonctions f1 pour le cas de la sollicitation en compression et f2 pour le cas de la sollicitation en traction, caractérisé en ce qu'un écart, déterminé en cas de déformation élastique du mât, de la pente de la loi de variation de la fonction f1 par rapport à la pente de la loi de variation de la fonction f2, ou par rapport à des valeurs de référence respectives, est interprété comme critère pour au moins une formation de fissure dans le mât (1).

2. Procédé selon la revendication 1, caractérisé en ce qu'une divergence des lois de variation linéaires ou partiellement linéaires des fonctions f1 et f2, rapportées au même point origine, est interprétée comme critère pour une formation de fissure.

3. Procédé selon l'une des revendications 1 et 2, caractérisé en ce que les fonctions f1 et f2 sont représentées optiquement, en commun, sur un écran (11) raccordé à l'unité de traitement (9).

4. Procédé selon l'une des revendications 1 à 3, caractérisé en ce que les lois de variation respectives des fonctions f1 et f2 sont tracées en commun à l'aide d'une imprimante (12) raccordée à l'unité de traitement (9).

5. Procédé selon l'une des revendications 1 à 4, caractérisé en ce que les pentes (C) des lois de variation des fonctions f1 et f2, rapportées au même point origine sont, en fonction d'instants différents, interprétées comme critère pour un agrandissement de fissure.

6. Procédé selon la revendication 5, caractérisé en ce que les pentes (C) calculées, dépendant du temps, des lois de variation des fonctions f1 et f2, sont visualisées sur un écran (11) raccordé à l'unité de traitement (9) et/ou tracées à l'aide d'une imprimante (12), sous la forme d'une courbe caractéristique (N).

7. Dispositif de contrôle et de la résistance de mâts ancrés en position verticale, comprenant une unité d'application de force (5) à l'aide de laquelle il est possible d'appliquer au mât (1), au-dessus de son ancrage (2), des forces croissantes de traction et de compression F, pouvant être relevées à l'aide d'un capteur de force (7), en vue de solliciter le mât avec des moments de flexion de directions opposées, le dispositif comportant également au moins un capteur de déplacement (8) pouvant être appliqué contre le mât (1), au-dessus de l'ancrage (2) du mât, pour mesurer la déviation latérale S du mât apparaissant en raison des moments de flexion, les valeurs de mesure pour la force F et la déviation S, produites par les capteurs de force et de déplacement (7, 8), pouvant être traitées en même temps ou presque en même temps dans une unité de traitement (9) en ce qui concerne les fonctions f = F(S) et respectivement f = S(F), ceci de manière distincte selon des lois de variation des fonctions f1 pour le cas de la sollicitation en compression et f2 pour le cas de la sollicitation en traction, en vue de la mise en oeuvre du procédé selon l'une des revendications 1 à 6, caractérisé en ce qu'un écart, déterminé en cas de déformation élastique du mât, de la pente (C) de la loi de variation de la fonction f1 par rapport à la pente de la loi de variation de la fonction f2, ou par rapport à des valeurs de référence respectives, peut être interprété, dans l'unité de traitement (9). comme critère pour au moins une formation de fissure dans le mât (1).

8. Dispositif selon la revendication 7, caractérisé en ce qu'une divergence des lois de variation linéaires ou partiellement linéaires des fonctions f1 et f2, rapportées au même point origine, peut être interprétée comme critère pour une formation de fissure.

9. Dispositif selon la revendication 7 ou 8, caractérisé en ce que les fonctions f1 et f2 peuvent être représentées optiquement, en commun, sur un écran (11) raccordé à l'unité de traitement (9).

10. Dispositif selon l'une des revendications 7 à 9, caractérisé en ce que les fonctions f1 et f2 sont reproduites en commun à l'aide d'une imprimante (12) raccordée à l'unité de traitement (9).

11. Dispositif selon l'une des revendications 7 à 10, caractérisé en ce que les pentes (C) des lois de variation des fonctions f1 et f2, rapportées au même point origine, peuvent en fonction d'instants différents, être interprétées comme critère pour un agrandissement de fissure.

12. Dispositif selon la revendication 11, caractérisé en ce que les pentes (C) calculées, dépendant du temps, des lois de variation des fonctions f1 et f2 peuvent être visualisées sur un écran (11) raccordé à l'unité de traitement (9) et/ou reproduites à l'aide d'une imprimante (12), sous la forme d'une courbe caractéristique (N).
